# EUROPEAN PATENT APPLICATION

(11) **EP 3 050 651 A1**
(43) Date of publication of application: **03.08.2016**
(21) Application number: 16150945.0
(22) Date of filing: 12.01.2016
(51) Int. Cl.: B22F 5/00, B22F 3/105, F01D 5/14

(54) **3D PRINTING OF LEAD EDGE PROTECTIVE SHEATHS**

(30) Priority: 16.01.2015 US 201514598329
(71) Applicant: Hamilton Sundstrand Corporation, Windsor Locks, CT 06096-1010 (US)
(72) Inventor: SMITH, Blair A., South Windsor, CT Connecticut 06074 (US)
(74) Representative: Bridge, Kerry Ann

(57) **Abstract**

A method 200 of manufacturing a lead edge protective sheath 106, 300, 400 for an airfoil component 100 is provided. The method includes generating a digital model of a lead edge protective sheath for an airfoil component 202, inputting the digital model into an additive manufacturing machine 204, and printing 206, with one or more selected materials, a lead edge protective sheath for an airfoil component based on the digital model.

## Description

### BACKGROUND OF THE INVENTION

This subject matter disclosed herein generally relates to protective sheaths and, more particularly, to a protective sheath that is 3D printed for improving resistance to erosion of propeller blades, vanes, turbine blades, or other airfoil components.

Airfoil-shaped components are used in various types of aircraft for propeller blades and engine components such as vanes and blades, and outside of the aircraft industry airfoil-shaped components may be used in fans, turbines, or other devices. Particularly in the aircraft industry, but not limited thereto, the airfoil components are typically located within an air stream that may include foreign objects such as sand, ice, water droplets, stones, birds, or other debris. The foreign objects may strike or impact the airfoil component, particularly at a leading edge of the airfoil component. Over time, the foreign object strikes may cause mechanical damage that changes the shape of the airfoil component, which is detrimental to aerodynamic efficiency, or may break it. Airfoil components that are made of polymer composites may be particularly vulnerable to erosion because of the relatively soft nature of a polymer composite, although components made of other types of material are also vulnerable.

To protect the airfoil component, a sheath may be installed and/or used on the leading edge of the airfoil component to resist erosion. Typically, the sheath is made from a hard material that can, or may be configured to withstand, cracking, fracture, chipping, and breaking from impact with the foreign objects.

### BRIEF DESCRIPTION OF THE INVENTION

According to one embodiment, a method of manufacturing a lead edge protective sheath for an airfoil component is provided. The method includes generating a digital model of a lead edge protective sheath for an airfoil component, inputting the digital model into an additive manufacturing machine, and printing, with one or more selected materials, a lead edge protective sheath for an airfoil component based on the digital model.

According to another embodiment, a lead edge protective sheath for an airfoil component is provided. The sheath includes an additive manufactured body having an exterior surface and an interior surface and configured to form a lead edge protective sheath for an airfoil component, wherein the interior surface is configured to conform to a leading edge surface of an airfoil component and includes one or more protrusions configured to increase the retention of the sheath onto the leading edge surface of the airfoil component.

Technical features of the invention include forming a sheath for an airfoil component by additive manufacturing techniques, such as 3D printing, which do not require the use of former techniques, such as electroplating baths, and thus related issues/problems associated with prior techniques are eliminated. Further technical features of the invention include forming a sheath for an airfoil component that includes one or more protrusions on an interior or inner side of the sheath to enable improved mating, attachment, and retention between the sheath and an airfoil component to which the sheath is applied.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:
FIG. 1A is a top plan view of an airfoil component in accordance with an exemplary embodiment of the invention;
FIG. 1B is a cross-sectional view of the airfoil component of FIG. 1A along the line B-B;
FIG. 2 is a process of forming a sheath in accordance with an exemplary embodiment of the invention;
FIG. 3 is a cross-sectional view of a sheath in accordance with an exemplary embodiment of the invention;
FIG. 4 is a cross-sectional view of a sheath in accordance with another exemplary embodiment of the invention.

### DETAILED DESCRIPTION OF THE INVENTION

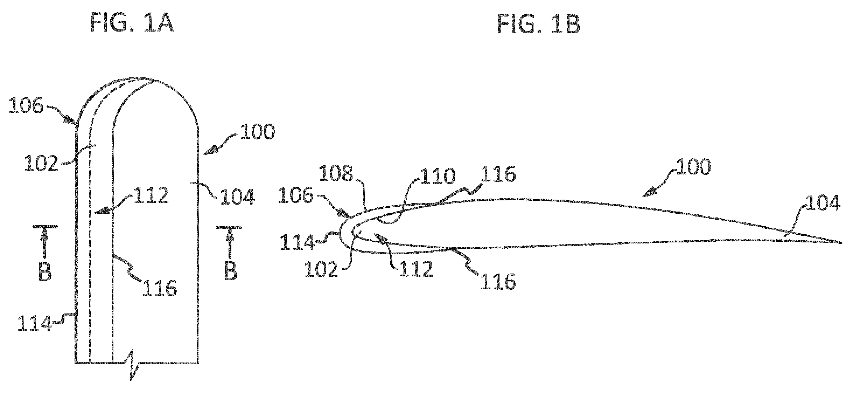

FIGS. 1A and 1B illustrate an exemplary airfoil component 100 in accordance with embodiments of the invention. Airfoil component 100 may be a propeller blade for an aircraft or wind turbine, an airfoil used within a gas turbine engine (e.g., an inlet guide vein, a compressor or turbine vein, or a compressor or turbine blade), or other type of airfoil. FIG. 1A is a top down view of the airfoil component 100, and FIG. 1B is a cross-sectional view of the airfoil component 100 as viewed along the cross-line B-B of FIG. 1A.

In the illustrated example, the airfoil component 100 includes a leading edge 102 and a trailing edge 104 relative to an air flow or expected air flow over the airfoil component 100. As will be appreciated by those of skill in the art, the airfoil component 100 may be made of any of a variety of different types of materials, for example, including but not limited to, a metallic alloy and/or a polymer composite. In operation, the airfoil component 100, and particularly the leading edge 102, may be subjected to erosion from airborne objects ("foreign objects") such as water droplets, sand, stones, ice, birds, or other objects that may impact or strike the leading edge 102.

To protect the airfoil component 100, and particularly the leading edge 102, from erosion that results from the impacts from foreign objects, a sheath 106 is secured on the leading edge 102 of the airfoil component 100. The sheath 106 is relatively hard and mechanically tough compared to the airfoil component 100, and thereby protects the airfoil component 100 from erosion.

The sheath 106 includes an outer side or exterior surface 108, an inner side or interior surface 110, a leading edge 114 and a trailing edge 116. The interior surface 110 of the sheath 106 forms a cavity 112 that corresponds in shape and size to the leading edge 102 of the airfoil component 100. The sheath 106 is fitted on the leading edge 102 such that the interior surface 110 of the sheath 106 is adjacent to and contacting the leading edge 102 of the airfoil component 100. For example, the sheath 106 may be press-fit onto the leading edge 102. Alternatively, the sheath 106 may be secured onto the leading edge 102 in other suitable manners, such as with an adhesive, by using mechanical fasteners, and/or by forming the sheath 102 directly onto the airfoil component 100.

The sheath 106 is made of a structurally strong material that may provide a high erosion resistance, for example, including titanium, titanium alloys, stainless steel, copper, nickel, cobalt, and nickel-cobalt alloys. For example, in some embodiments, a 100% cobalt material may be used or, in other embodiments, a combination of cobalt and nickel may be used to provide a desirable degree of erosion resistance and protection. The amounts of cobalt and nickel in a combination used for the material may be selected based upon a desired erosion resistance of the sheath 106. That is, the amounts influence mechanical properties of the sheath 106 such as hardness and toughness, which correspond to the erosion resistance, and thus the amounts may be selected as desired.

In one example, the material includes between about 30 weight % and about 54 weight % of cobalt with a balance amount being substantially nickel; or, in another example, the material includes between about 8 weight % and about 32 weight % of cobalt with a balance amount being substantially nickel. Forming the sheath 106 with this composition provides a hardness of greater than about 410 VHN (Vicker's hardness), which is greater than materials used for the airfoil components. In another example, the material selected to form the sheath contains cobalt, nickel, and trace amounts of unremovable or uncounted impurities. The addition of these uncounted impurities and/or other elements may materially affect the mechanical properties or thermal resistance of the formed sheath to achieve desired results. Thus, the sheath may be formed of material(s) and/or compositions that are selected and designed for erosion resistance, for example, including titanium, titanium alloys, stainless steel, copper, nickel, cobalt, and nickel-cobalt alloys. The term "about" as used in this description relative to compositions refers to possible variation in the compositional percentages, such as normally accepted variations or tolerances in the art. The term "about" as used relative to hardness refers to statistical variation in measurements of the hardness.

In accordance with various embodiments of the invention, the sheath 106 is formed by an additive manufacturing technique, such as 3D printing using any or all of the above listed materials, and/or other materials. Advantageously, additive manufacturing processes enable a user to select from a very wide variety and selection of materials to form the sheath. Further, using additive manufacturing techniques does not require the use of an electroplating bath or other prior manufacturing techniques, and, therefore, all of the problems associated with electroplating and the other former techniques may be eliminated. For example, mandrel and shielding fixture development, solution control, and waste treatment have each been issues or problems associated and resulting from prior manufacturing techniques, which may now be eliminated and/or removed from the manufacturing process.

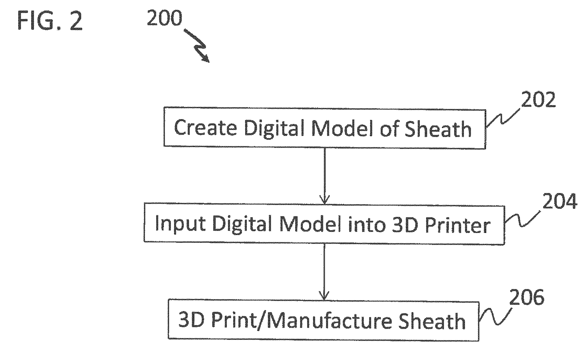

Turning now to FIG. 2, a process 200 of forming a sheath in accordance with embodiments of the invention is shown. At step 202, a 3D digital model of the sheath is created. Computers and/or other types of input and computing devices may be used to generate a digital model of a sheath. Software and hardware for this purpose is known in the art. Further, the programs and/or software enable a user to adjust, modify, control, specify, and/or change various (or all) features of a structure to be formed. For example, a user may be able to control dimensions, shapes, numbers of features, material selections, etc. of a structure, because the structure is merely a digital representation or model.

With respect to generating a sheath, the digital model may be configured to structurally match the form of the airfoil component to which it is to be applied. Advantageously, by use of a digital model, the formation errors that may result from other manufacturing processes may be avoided. Furthermore, by use of digital models, accurate modeling and/or simulations may be carried out electronically prior to manufacturing of the physical sheath. Thus, efficient modifications and/or alterations may be made without the time consuming efforts of manufacturing prototypes.

Then, at step 204, a file of the digital model from step 202 is input into an additive manufacturing machine, such as a powder bed laser fusion additive manufacturing machine or powder bed electron beam additive manufacturing machine. As known in the art, powder based additive manufacturing machines employ a powder base of the material that is to be used to form the desired structure. The powder of the additive manufacturing machine is selected to be the appropriate material, such as a metal, for forming the sheath. Thus, the powder may be, for example, one or more of powdered forms of titanium, titanium alloys, stainless steel, copper, nickel, cobalt, and nickel-cobalt alloys, or combinations thereof, or of various other materials. In some exemplary embodiments, the material for a leading edge of the sheath could be a layer of chromium. In alternative embodiments, a more ductile material could be incorporated at the lead edge to better resist foreign object damage. These are merely presented as examples, and those of skill in the art will appreciate that the materials may be selected to achieve a desired result, without departing from the scope of the invention. Advantageously, metallic and other composition powders can be those of virtually any metal, alloy, composite, plastic, or other materials; many of which would not have been possible to electroplate or form using prior manufacturing techniques. Thus, various embodiments of the invention enable the formation of sheaths for airfoil components to be formed from materials not previously possible to use.

The additive manufacturing machine then prints, creates, or forms the sheath at step 206 by laying down one layer of metal at a time, as is known in the art. For example, the selected powder may be shot or forced into a processing printer and impacted with an E-beam or laser to fuse the power into a solid layer with a particular shape and thickness, as desired. As will be appreciated by those of skill in the art, the above example of 3D printing is merely provided as an example and other types and/or processes of additive manufacturing may be used without departing from the scope of the invention.

The layering process of step 206 is repeated layer by layer until the desired configuration has been built. In some embodiments, the sheath can be manufactured from all of the same powder or metal. However, because the powders can be those of virtually any metal, alloy, composite, plastic, or other composition; many of which would not have been possible under prior manufacturing techniques, any construction, including combinations of materials, are made possible by the invention. For example, a sheath may be configured or constructed with a core or inner side (e.g., interior surface 110) formed of a first material and an exterior or outer side (e.g., exterior surface 108), which may be configured to improve erosion resistance and/or attachment and retention on the airfoil component (e.g., airfoil component 100). The selection of materials may be made during step 202 of process 200 or during step 204.

Thus, in accordance with various embodiments of the invention, more than one material may be incorporated into the manufactured sheath to create a multi-metal and/or layered design. For example, a harder metal could be deposited last, i.e., as a final layer in step 206, to increase the lead edge erosion resistance, while a softer metal could be deposited at early stages of step 206 to form the interior surface of the sheath.

During step 202 of process 200, the physical structure of the sheath may be configured and/or modified with ease. For example, the cross-sectional thickness and curvature can be easily varied from the tail edge to the lead edge of the sheath and correspondingly from the inboard to the outboard tip of the sheath. Increased thickness can be programmed into the model for specific areas subject to greater wear or stress. Further, to prevent possible sheath liberation or separation from the airfoil component during service, protrusions can be designed into the 3D digital model at step 202 on the interior surface of the sheath. The protrusions may function as holding or anchor points. Then, during manufacturing and/or formation at step 206, the protrusions may be formed simultaneously during the creation of the sheath. The protrusions may be formed from a material that is the same as or different from the material that is used to form the rest of the sheath.

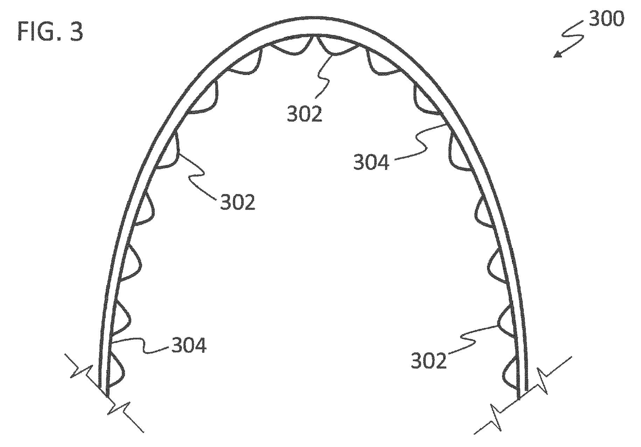

Turning now to FIG. 3, a cross-section of an exemplary embodiment of a sheath in accordance with the invention is shown. Sheath 300 may be formed by an additive manufacturing process, as described above, with protrusions 302. Protrusions 302 are formed on an inner side 304 of the sheath 300. The protrusions 302 may be formed as a surface roughness, thus comprising a large number of protrusions 302. In an alternative embodiment, the protrusions 302 may be formed as a single element that locks into a mating surface or configuration of the airfoil component, such as a cam or mandrel configuration.

The protrusions 302 provide a mechanism for mechanical interlock with the underlying substrate (composite) of the airfoil component (exterior surface of the airfoil component) thereby improving the bond strength over the present art of a flat-on-flat surface adhesive bond. The number, size, shape, and location of protrusions 302 can be deliberately incorporated into the digital model and varied depending on the sheath configuration being created. As will be appreciated by those of skill in the art, using prior manufacturing techniques, substantial difficulty would arise in attempts to create an inner surface textured such as that described on a conventional electroforming mandrel because a component so formed could not be liberated from the mandrel or mold. Those of skill in the art will appreciate that an adhesive may still be used with the protrusions 302 without departing from the scope of the invention.

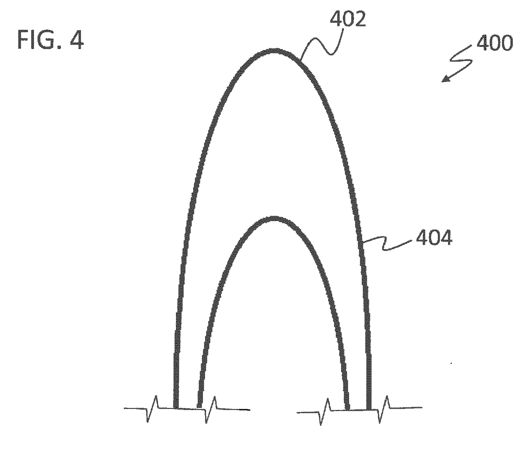

Turning now to FIG. 4, a cross-section of another exemplary embodiment of a sheath in accordance with the invention is shown. Sheath 400 may be formed by an additive manufacturing process, as described above, with an extended leading edge 402. Leading edge 402 is formed on an outer side 404 of the sheath 400. The leading edge 402 may be configured to be more aerodynamic and/or provide additional erosion resistance at the tip or leading edge of the sheath. In some examples and configurations, the leading edge 402 may be formed with a "bullet nose" that allows for greater wear or erosion resistance in predetermined areas. Further, in some embodiments, the leading edge 402 may be formed from one or more materials that are layered to form an improved erosion resistance.

As will be appreciated by those of skill in the art, in view of the examples of FIGS. 3 and 4, any desired configuration for a sheath may be constructed using the techniques described herein. Thus, the examples of FIGS. 3 and 4 are merely provided for exemplary and explanatory purposes, and the invention is not limited thereby.

Advantageously, this technology differs significantly from the prior technology of metallic lead edge sheath formation in that there is no need to develop and create mandrels or molds. Moreover, in the case of the prior techniques of electroforming, shielding, and electroplating, these solutions are no longer needed. Advantageously, in accordance with embodiments of the invention, selection of materials may no longer include dangerous or toxic materials, while still maintaining a high erosion resistance sheath.

Furthermore, advantageously, sheaths manufactured in accordance with embodiments of the invention can be manufactured in practically any three dimensional configuration using digital files. For example, protrusions that function as holding or anchor points can be designed into the interior of the sheath to facilitate bonding and adhesion to the composite airfoil component surface.

Moreover, the creation of thickness profiles that are difficult to create by electroforming or other forming operations is no longer an obstacle. For example, sheaths that experience great wear in select or predetermined areas can be easily configured and layering of materials and/or compositions are enabled. Thus, different thickness or physical configurations may be achieved along with different material composition constructions. Further, for example, the interior portion of the sheath can be custom tailored to match the surface profile of the underlying composite structure of the airfoil component while maintaining an improved exterior or leading edge on the sheath.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments and/or features.

For example, although an exemplary configuration of an airfoil component is shown and described, those of skill in the art will appreciate that other configurations and designs are possible without departing from the scope of the invention. Moreover, although described, in part, with respect to aircraft operations, the sheaths and sheathed airfoil components described herein may be used in and/or for turbine blades, composite fan blades, roto-craft blades, rotor blades, propeller blades, wind turbine blades, power plant turbine blades, etc., and is not limited to air applications, but may be applied to any type of blade or similar device that operates in any kind of fluid (gases and liquids), including water. Thus, in this description and disclosure, "airfoil" merely refers to any fluid dynamic structure that is configured to efficiently move through a fluid, and is not limited to only "air."

Further, although only a few examples of sheath configurations have been shown and described, those of skill in the art will appreciate that additive manufacturing of sheaths based on digital models enables almost any geometric shape, size, configuration, etc., and the use of any materials that are desired for forming the sheath, including those not yet discovered, are encompassed by embodiments of the invention.

Accordingly, the invention is not to be seen as limited by the foregoing description, but is only limited by the scope of the appended claims.

## Claims

1. A method (200) of manufacturing a lead edge protective sheath for an airfoil component (100), the method comprising:
generating a digital model of a lead edge protective sheath for an airfoil component (202);
inputting the digital model into an additive manufacturing machine (204); and
printing (206), with one or more selected materials, a lead edge protective sheath for an airfoil component based on the digital model.

2. The method of claim 1, wherein the digital model includes one or more protrusions (302) on an interior surface of the digital model of the sheath, and wherein the printing step includes forming a sheath (106, 300, 400) including one or more protrusions on an interior surface thereof.

3. The method of any of the preceding claims, wherein the digital model includes an extended leading edge on an exterior surface (108, 404) of the digital model of the sheath, and wherein the printing step includes forming a sheath (106, 300, 404) including an extended leading edge on an exterior surface thereof.

4. The method of any of the preceding claims, wherein the digital model includes a layered sheath comprising two or more layers, wherein at least two of the two or more layers are composed of different materials, and wherein the printing step (206) includes forming a sheath including two or more layers wherein at least two of the two or more layers are composed of different materials.

5. The method of any of the preceding claims, wherein the printing step (206) includes using a powdered metal as a base for the printing step.

6. A lead edge protective sheath (106, 300, 400) for an airfoil component (100), the sheath comprising:
an additive manufactured body having an exterior surface and an interior surface and configured to form a lead edge protective sheath for an airfoil component, wherein the interior surface is configured to conform to a leading edge surface of an airfoil component and includes one or more protrusions configured to increase the retention of the sheath onto the leading edge surface of the airfoil component.

7. The sheath of claim 6, wherein the exterior surface (108, 404) is formed having an extended surface.

8. The sheath of claim 7, wherein the extended surface forms a bullet edge.

9. The sheath of any of claims 6-8, wherein the one or more protrusions (302) are configured to form a mechanical lock with an exterior surface of an airfoil component (100) when applied thereto.
